# EUROPEAN PATENT SPECIFICATION

(11) **EP 4 056 404 B1**
(45) Date of publication and mention of the grant of the patent: **18.11.2026**
(21) Application number: 22159526.7
(22) Date of filing: 01.03.2022
(51) Int. Cl.: B60L 3/00, B60L 7/10, B60L 7/20, B60L 58/12, B60L 7/14, B60L 7/16, B60L 7/18, B60L 7/22

(54) **VEHICLE**
FAHRZEUG
VÉHICULE

(30) Priority: 12.03.2021 JP 2021040057
(43) Date of publication of application: 14.09.2022
(73) Proprietor: TOYOTA JIDOSHA KABUSHIKI KAISHA, Toyota-shi, Aichi-ken, 471-8571 (JP)
(72) Inventor: KAITA, Keiji, TOYOTA-SHI, AICHI-KEN, 471-8571 (JP); MINAMIURA, Keiichi, TOYOTA-SHI, AICHI-KEN, 471-8571 (JP); HIRASAWA, Takahiko, TOYOTA-SHI, AICHI-KEN, 471-8571 (JP)
(74) Representative: Cabinet Beau de Loménie

(56) References cited:
- US-A1- 2006 208 708
- US-A1- 2011 148 426
- US-A1- 2015 202 966
- US-A1- 2016 340 865
- US-A1- 2018 111 497
- US-B2- 9 694 688

## Description

### BACKGROUND OF THE INVENTION

### 1. Field of the Invention

The present disclosure relates to vehicles, and more particularly to a vehicle with an energy storage device.

### 2. Description of Related Art

Japanese Unexamined Patent Application Publication No. 2019-119397 (JP 2019-119397 A) discloses a power supply system for a vehicle that boosts the voltage of electric power supplied from a battery and supplies the boosted voltage to a motor. This power supply system identifies the location of an abnormality in a converter, an inverter, the motor, etc. In this power supply system, the boosted voltage is set to a lower value when the abnormality has occurred in a portion located after the boosting than when the abnormality has occurred in a portion located before the boosting. US 2016/340865 discloses a shovel with reduction of the motor generator output when the power storage system is stopped. US 2006/0208708 A1 discloses an accumulator system for a vehicle in which, when a minor short-circuiting abnormality of an accumulator battery is detected, charge and discharge power limiting values are changed.

### SUMMARY OF THE INVENTION

In a vehicle, a current of an energy storage device may not flow into a drive device for a motor but circulate in the energy storage device or between the inside and outside of the energy storage device due to a failure of the energy storage device. Such a current (hereinafter referred to as "circulating current") causes power loss. JP 2019-119397 A does not consider such a problem.

The present disclosure was made to solve the above problem, and it is an object of the present disclosure to provide a vehicle that can reduce power loss due to a circulating current in an energy storage device.

An aspect of the present disclosure relates to a vehicle. The vehicle includes a motor configured to generate electric power, an energy storage device configured to store the electric power generated by the motor, a drive device electrically connected to the energy storage device and the motor and configured to drive the motor, and a processor configured to control the drive device. The drive device includes an inverter. The processor is configured to control the drive device to cause the motor to generate less power when a circulating current occurs than when there is no circulating current. The circulating current is a current that does not flow into the drive device but circulates in the energy storage device or circulates between inside and outside of the energy storage device. The processor is configured to control the inverter to cause the motor to output less regenerative torque when the circulating current occurs than when there is no circulating current.

With the above configuration, the electric power for charging the energy storage device decreases. Accordingly, the amount of electric power stored in the energy storage device decreases, and the voltage of the energy storage device decreases. As a result, the circulating current in the energy storage device decreases. Accordingly, power loss due to the circulating current in the energy storage device can be reduced.

In this configuration, the processor controls the inverter so that regenerative torque of the motor is reduced when the circulating current occurs.

With the above configuration, the electric power generated by the motor during regenerative braking of the vehicle is reduced, and the electric power for charging the energy storage device is therefore reduced. As a result, the amount of electric power stored in the energy storage device decreases, and the voltage of the energy storage device decreases. Therefore, the circulating current in the energy storage device decreases. Accordingly, power loss due to the circulating current in the energy storage device can be reduced.

In the above aspect, the vehicle may further include a load connected to a power line between the energy storage device and the drive device. The processor may be configured to control the load to increase power consumption of the load when the circulating current occurs than when there is no circulating current.

With the above configuration, the electric power that is supplied from the energy storage device to the load increases. The amount of electric power stored in the energy storage device therefore decreases faster than when this control is not performed. The voltage of the energy storage device therefore decreases faster than in the case described above. As a result, the circulating current in the energy storage device decreases faster than in the case described above. Accordingly, the total power loss due to the circulating current in the energy storage device can be reduced.

In the above aspect, the vehicle may further include a power converter connected to a power line between the energy storage device and the drive device. The power converter may be configured to receive the electric power stored in the energy storage device via the power line and convert the received electric power. The processor may be configured to control the power converter to increase output power of the power converter when the circulating current occurs than when there is no circulating current.

With the above configuration, the electric power that is supplied from the energy storage device or the motor to the power converter increases. The amount of electric power stored in the energy storage device therefore decreases faster than when this control is not performed. The voltage of the energy storage device therefore decreases faster than in the case described above. As a result, the circulating current in the energy storage device decreases faster than in the case described above. Accordingly, the total power loss due to the circulating current in the energy storage device can be reduced.

The present disclosure can provide a vehicle that can reduce power loss due to a circulating current in an energy storage device.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 shows an overall configuration of a vehicle according to a first embodiment;
FIG. 2 schematically shows a circulating current flowing in a battery;
FIG. 3 is a flowchart showing an example of the steps of a process that is performed by a control device according to the first embodiment;
FIG. 4 illustrates a method for controlling an inverter when reducing power generation of a motor generator;
FIG. 5 shows an example of how the internal resistance value of a certain cell of the battery, the voltage of the battery, and the value of a circulating current change with time during power generation of the motor generator;
FIG. 6 schematically shows a circulating current flowing out of the battery;
FIG. 7 shows the overall configuration of a vehicle according to a second embodiment;
FIG. 8 is a flowchart showing an example of the steps of a process that is performed by a control device according to the second embodiment; and
FIG. 9 shows an example of how insulation resistance, the voltage of the battery, and the value of a circulating current change with time during power generation of a motor generator.

### DETAILED DESCRIPTION OF EMBODIMENTS

Hereinafter, embodiments will be described in detail with reference to the drawings. The same or corresponding portions are denoted by the same signs throughout the drawings, and description thereof will not be repeated.

### First Embodiment

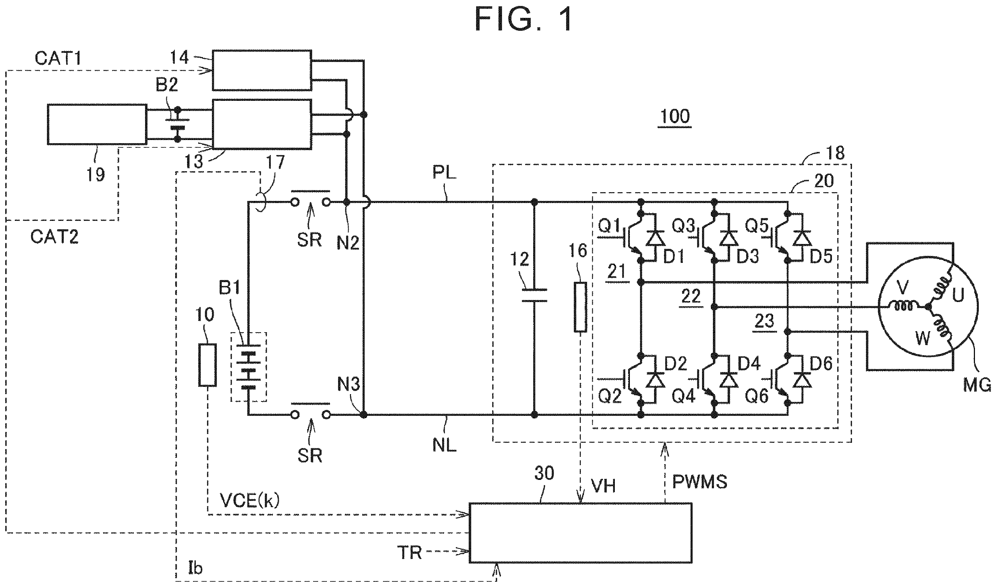

FIG. 1 shows an overall configuration of a vehicle according to a first embodiment. A vehicle 100 is an electrically powered vehicle that runs on electricity. In an example described in the present embodiment, the vehicle 100 is an electric vehicle. However, the vehicle 100 may be any other electrically powered vehicle such as a hybrid vehicle or plug-in hybrid vehicle further equipped with an engine (not shown) or a fuel cell vehicle (not shown) further equipped with a fuel cell (not shown).

Referring to FIG. 1, the vehicle 100 includes a battery B1, system relays SR, a voltage sensor 10, a current sensor 17, power lines PL, NL, a power control unit (PCU) 18, a motor generator MG, and a control device 30. The vehicle 100 further includes a direct current-to-direct current (DC-to-DC) converter 13, an air conditioner 14, auxiliary machinery 19, and a battery B2.

The battery B1 is a battery pack including a plurality of cells. Each cell is a secondary battery such as a lithium ion battery, a lead-acid battery, or a nickel metal hydride battery. The lithium ion battery is a secondary battery using lithium as a charge carrier, and includes a common lithium ion battery using a liquid electrolyte and an all solid state battery using a solid electrolyte. The battery B1 is an example of an energy storage device configured to charge and discharge. An energy storage device composed of an energy storage element such as an electric double-layer capacitor may be used instead of the battery B1. The battery B1 is connected to the PCU 18 (described later) via the system relays SR.

The voltage sensor 10 detects a voltage VCE(k) of each cell in the battery B1. Specifically, the voltage VCE(k) is the voltage of the kth one of n cells included in the battery B1 (where n and k are natural numbers, and 1 ≤ k ≤ n). The voltage sensor 10 outputs the detected value to the control device 30.

The current sensor 17 detects a current Ib output from the battery B1. The current sensor 17 outputs the detected value to the control device 30.

The power line PL electrically connects a positive electrode of the battery B1 and the PCU 18. The power line NL electrically connects a negative electrode of the battery B1 and the PCU 18.

The PCU 18 is a drive device that drives the motor generator MG (described later). The PCU 18 includes a capacitor 12, a voltage sensor 16, and an inverter 20. The capacitor 12 is connected between the power line PL and the power line NL. The voltage sensor 16 detects a voltage VH between terminals of the capacitor 12. The voltage sensor 16 outputs the detected value to the control device 30.

The inverter 20 is configured to convert direct current power received from the power lines PL, NL to alternating current power. The inverter 20 drives the motor generator MG using the converted alternating current power. The inverter 20 is also configured to convert alternating current power generated by the motor generator MG (described later) during braking of the vehicle 100 to direct current power.

The inverter 20 includes a U-phase arm 21, a V-phase arm 22, and a W-phase arm 23. The U-phase arm 21 includes switching elements Q1, Q2 and diodes D1, D2. The diodes D1, D2 are connected in antiparallel with the switching elements Q1, Q2, respectively. The V-phase arm 22 includes switching elements Q3, Q4 and diodes D3, D4. The diodes D3, D4 are connected in antiparallel with the switching elements Q3, Q4, respectively. The W-phase arm 23 includes switching elements Q5, Q6 and diodes D5, D6. The diodes D5, D6 are connected in antiparallel with the switching elements Q5, Q6, respectively.

The switching elements Q1 to Q6 are, for example, insulated gate bipolar transistors (IGBTs) or metal oxide semiconductor field effect transistors (MOSFETs). The switching elements Q1 to Q6 are pulse width modulation (PWM)-controlled based on the switching period and duty cycle according to a control signal PWMS output from the control device 30.

The motor generator MG is an alternating current rotating electrical machine and is, for example, a three-phase alternating current synchronous motor generator. The motor generator MG is electrically connected to the inverter 20. The motor generator MG drives wheels (not shown) of the vehicle 100 as it rotates using the electric power supplied from the battery B1 via the inverter 20. The vehicle 100 thus runs.

The motor generator MG is also configured to generate electric power during braking of the vehicle 100. The alternating current power generated by the motor generator MG is converted to direct current power by the inverter 20. The converted direct current power is stored in the battery B1 through the power lines PL, NL. This direct current power can also be supplied to the battery B2 or the auxiliary machinery 19 via the DC-to-DC converter 13 or to the air conditioner 14 (all of which will be described later).

The vehicle 100 further includes a charging device (not shown). The charging device is configured to convert alternating current power supplied from an external power supply (not shown) to charging power (direct current power) for the battery B1 when the vehicle 100 is connected to the external power supply.

The DC-to-DC converter 13 and the air conditioner 14 are connected to the power lines PL, NL. The DC-to-DC converter 13 and the air conditioner 14 are configured to receive the direct current power output from the battery B1 or the direct current power output from the inverter 20 during regenerative braking of the vehicle 100 (during power generation of the motor generator MG) through the power lines PL, NL and operate using the received direct current power.

The air conditioner 14 is an example of a load that operates according to a control signal CTA1 from the control device 30.

The DC-to-DC converter 13 is configured to convert the received power to direct current power at an auxiliary machinery voltage level (e.g., 12 V). The DC-to-DC converter 13 is connected to the battery B2 and the auxiliary machinery 19, and operates according to a control signal CTA2 from the control device 30. The DC-to-DC converter 13 is composed of, for example, an isolation transformer.

Like the battery B 1, the battery B2 is an example of an energy storage device configured to charge and discharge. The battery B2 is an energy storage device for the auxiliary machinery 19 that stores the direct current power converted by the DC-to-DC converter 13. The battery B2 is a battery pack including a plurality of cells. Each cell is a secondary battery such as a lead-acid battery or a nickel metal hydride battery. The auxiliary machinery 19 receives the direct current power converted by the DC-to-DC converter 13 such as the power stored in the battery B2 and operates using the received power.

The control device 30 includes a central processing unit (CPU) and a memory (both not shown). The CPU controls each device of the vehicle 100 based on information stored in the memory etc. The memory includes a read-only memory (ROM) and a random access memory (RAM). The ROM stores programs etc. that are executed by the CPU. The RAM temporarily stores data etc. that are referred to by the CPU. Control of the control device 30 is implemented by software processing, but may be implemented by hardware mounted on the control device 30.

The control device 30 controls each device of the vehicle 100 such as the system relays SR, the inverter 20, the DC-to-DC converter 13, the air conditioner 14, and the auxiliary machinery 19. For example, the control device 30 PWM-controls the inverter 20 to cause the motor generator MG to output torque according to a torque command value TR during traveling or braking of the vehicle 100. The control device 30 can also adjust the state of charge (SOC) of the battery B2 by controlling the DC-to-DC converter 13.

In the vehicle 100, the current of the battery B1 may not flow into the inverter 20 but circulate in the battery B1 due to a failure of a cell of the battery B1.

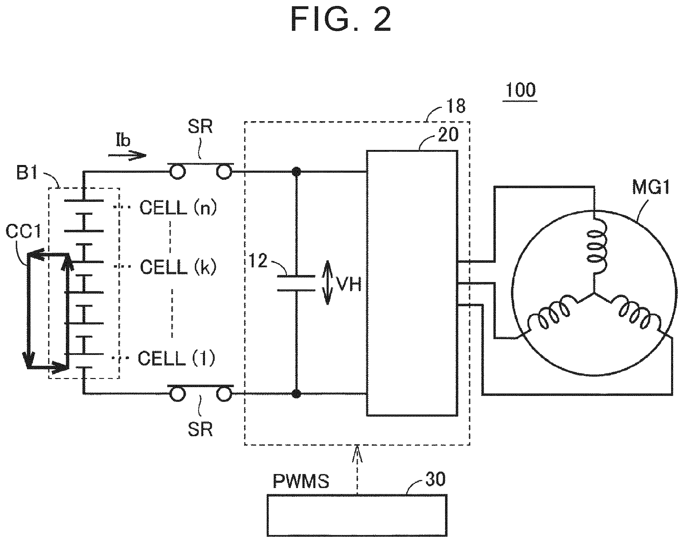

FIG. 2 schematically shows how a circulating current circulates in the battery B1. In FIG. 2, only a part of components of the vehicle 100 of FIG. 1 is shown for simplicity of description.

In the example of FIG. 2, a circulating current CC1 circulates in a circuit composed of cells CELL (1) to CELL (k) out of a plurality of cells CELL (1) to CELL (n) included in the battery B1 (hereinafter this circuit is also referred to as the "circulating current circuit"). The circulating current CC1 causes power loss.

Measures for reducing such power loss are shown in the present embodiment. Specifically, the control device 30 controls the inverter 20 to cause the motor generator MG to generate less power when the circulating current CC1 occurs than when there is no circulating current CC1. More specifically, the control device 30 controls the inverter 20 to cause the motor generator MG to output less regenerative torque when the circulating current CC1 occurs than when there is no circulating current CC1.

Hereinafter, a method for detecting the circulating current CC1 will be described. Typically, the internal resistances of the cells CELL (1) to CELL (k) through which the circulating current CC1 flows when the circulating current CC1 occurs in the battery B1 is higher than the internal resistances of the cells CELL (1) to CELL (k) when there is no circulating current CC1.

The control device 30 can therefore determine whether the circulating current CC1 has occurred, based on the internal resistances of the cells CELL (1) to CELL (n) of the battery B1. Specifically, the control device 30 can determine that the circulating current CC1 has occurred, when the internal resistance of any of the cells CELL (1) to CELL (n) has excessively increased.

The control device 30 can calculate the internal resistance of each cell of the battery B1 based on, for example, the voltage VCE(k) of each cell of the battery B1 detected by the voltage sensor 10 and the current Ib of the battery B1 detected by the current sensor 17. Specifically, the control device 30 plots the voltage and current values of each cell of the battery B1 on voltage-current coordinates, and uses the slope of a straight line represented by the coordinates of each plotted point as the internal resistance.

The control device 30 determines whether at least one of the internal resistances of the cells is equal to or higher than a first threshold. When the control device 30 determines that at least one of the internal resistances of the cells is equal to or higher than the first threshold, the control device 30 determines that the circulating current CC1 has occurred. The first threshold is determined as appropriate in advance in a preliminary evaluation test etc.

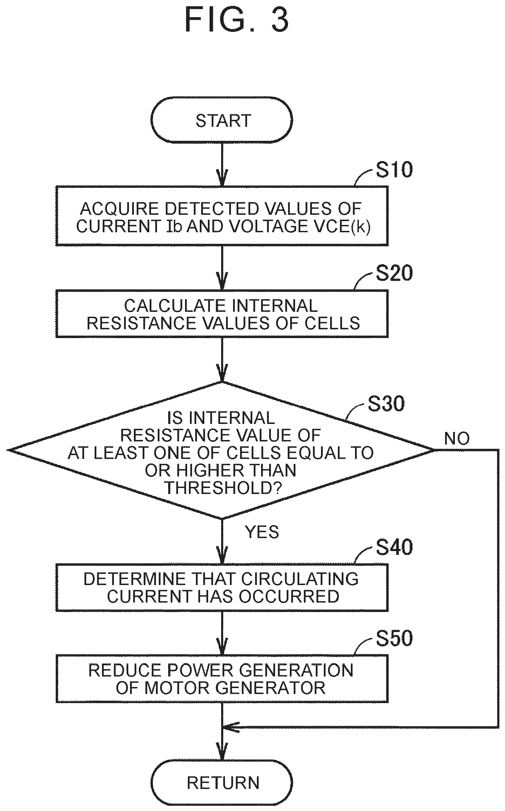

FIG. 3 is a flowchart showing an example of the steps of a process that is performed by the control device 30 according to the first embodiment. This process is performed at predetermined time intervals.

Referring to FIG. 3, the control device 30 acquires the detected values of the current Ib and the voltage VCE(k) from the current sensor 17 and the voltage sensor 10 (step S10), and calculates the internal resistance of each cell of the battery B1 according to the acquired detected values (step S20).

The control device 30 then determines whether the internal resistance of at least one of the cells of the battery B1 is equal to or higher than the first threshold (step S30). When the internal resistances of all of the cells of the battery B1 are lower than the first threshold (NO in step S30), the control device 30 ends the process. The process then returns to step S10 after the predetermined time interval. When the internal resistance of at least one of the cells of the battery B1 is equal to or higher than the first threshold (YES in step S30), the control device 30 determines that the circulating current CC1 has occurred (step S40).

The control device 30 then controls the inverter 20 to cause the motor generator MG to generate less power than when there is no circulating current CC1 (step S50). Specifically, when the circulating current CC1 has occurred, the control device 30 controls the inverter 20 to cause the motor generator MG to output less regenerative torque than when there is no circulating current CC1. For example, the control device 30 controls the inverter 20 so that the electric power generated by this torque becomes zero or so that the electric power to be used only for the air conditioner 14 or the auxiliary machinery 19 is generated.

Since the power generation of the motor generator MG is reduced, the electric power that is supplied from the motor generator MG to the battery B1 decreases. The SOC of the battery B1 therefore decreases. Since the SOC of the battery B1 is associated with the voltage VH of the battery B1, the voltage VH of the battery B1 decreases with the decrease in SOC of the battery B1. Accordingly, when the power generation of the motor generator MG is reduced, the voltage VH of the battery B1 decreases.

The current value of the circulating current CC1 is based on the internal resistance of the circulating current circuit and the sum of the voltages of the cells CELL (1) to CELL (k) through which the circulating current CC1 flows. The sum of the voltages of the cells CELL (1) to CELL (k) is related to the voltage VH of the battery B1. Accordingly, when the voltage VH of the battery B1 decreases due to the reduced power generation of the motor generator MG, the sum of the voltages of the cells CELL (1) to CELL (k) also decreases. The circulating current CC1 therefore also decreases. As a result, power loss due to the circulating current CC1 can be reduced.

After the power generation of the motor generator MG is reduced (after step S50), the control device 30 finishes the process. The process then returns to step S10 after the predetermined time interval.

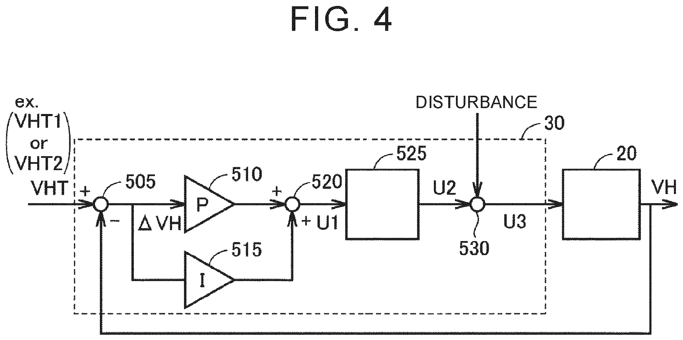

FIG. 4 illustrates a method for controlling the inverter 20 when reducing the power generation of the motor generator MG.

The control device 30 is configured to set a desired value VHT of the voltage VH in order to control the voltage VH. Specifically, as described below, the control device 30 performs feedback control according to the difference between the detected value of the voltage VH and the desired voltage VHT. In the present embodiment, proportional-integral (PI) control is used as an example of the feedback control.

Referring to FIG. 4, the control device 30 includes a subtraction unit 505, a proportional term calculation unit 510, an integral term calculation unit 515, addition units 520, 530, and an upper and lower limit processing unit 525.

The subtraction unit 505 calculates a deviation ΔVH (= VHT - VH) by subtracting the voltage VH detected by the voltage sensor 16 from the desired voltage VHT.

The proportional term calculation unit 510 calculates the proportional term in the PI control by multiplying the deviation ΔVH by a coefficient of proportionality.

The integral term calculation unit 515 calculates the integral term in the PI control by multiplying the deviation ΔVH by a predetermined gain and calculating an integral of the term obtained by the multiplication.

The addition unit 520 calculates the sum of the proportional term and the integral term calculated by the proportional term calculation unit 510 and the integral term calculation unit 515 as a controlled variable U1.

The upper and lower limit processing unit 525 performs upper limit processing and lower limit processing on the controlled variable U1. As a result, the upper and lower limit processing unit 525 outputs the controlled variable U2 that is smaller than a predetermined upper limit and equal to or larger than a predetermined lower limit. The upper limit is determined as appropriate in advance so that the duty cycle of the PWM control for the inverter 20 does not become excessively high or low. The addition unit 530 outputs a controlled variable U3 obtained by adding disturbance to the controlled variable U2.

The control device 30 controls the inverter 20 based on the controlled variable U3. The torque of the motor generator MG is thus adjusted, so that the voltage VH is adjusted to the desired voltage VHT.

In such a feedback control system, the control device 30 reduces the desired voltage VHT when it determines that the circulating current CC1 (FIG. 2) has occurred. Hereinafter, VHT1 represents the desired voltage VHT before being reduced by the control device 30, and VHT2 represents the desired voltage VHT after being reduced by the control device 30 (VHT1 > VHT2).

Before reducing the desired voltage VHT from VHT1 to VHT2, the control device 30 performs the above feedback control to control the voltage VH to VHT1. After reducing the desired voltage VHT from VHT1 to VHT2, the control device 30 performs the above feedback control to control the voltage VH to VHT2.

Specifically, in this case, when the voltage VH is higher than the desired voltage VHT (= VH2), the control device 30 controls the inverter 20 to reduce the power generation of the motor generator MG. Since the electric power that is supplied from the motor generator MG to the battery B1 thus decreases, the SOC of the battery B1 decreases. As a result, the voltage VH of the battery B1 decreases toward VHT2.

As described above, the control device 30 controls the inverter 20 based on the detected value of the voltage VH and the desired voltage VHT. Accordingly, the voltage VH eventually decreases from VHT1 to VHT2 when the circulating current CC1 occurs. As the sum of the voltages of the cells CELL (1) to CELL (k) (FIG. 2) decreases due to the decrease in voltage VH, the circulating current CC1 decreases. Power loss due to the circulating current CC1 can thus be reduced.

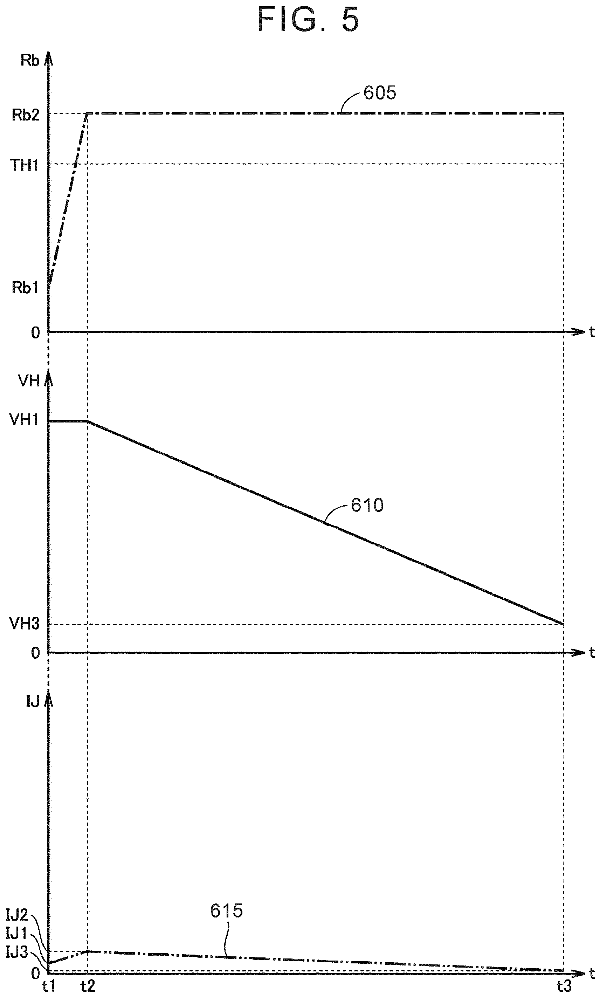

FIG. 5 shows an example of how the internal resistance value Rb of a certain cell of the battery B1, the voltage VH, and the value IJ of the circulating current CC1 change with time during power generation of the motor generator MG. In FIG. 5, the abscissas represent time t. The ordinates of the upper, middle, and lower graphs of FIG. 5 represent the internal resistance value Rb, the voltage VH, and the current value IJ, respectively.

Specifically, a line 605 represents a change in internal resistance value Rb with time. A line 610 represents a change in voltage VH with time. A line 615 represents a change in current value IJ with time.

It is herein assumed that the internal resistance value Rb, the voltage VH, and the current value IJ are Rb1, VH1, and IJ1 at time t1, respectively. Since the internal resistance value Rb is Rb1 at time t1 and Rb1 is smaller than a first threshold TH1 (line 605), the control device 30 determines that there is no circulating current CC1 in the battery B1.

When the internal resistance value Rb increases to Rb2 at time t2 and Rb2 is equal to or larger than the first threshold TH1 (line 605), the control device 30 determines that the circulating current CC1 has occurred. The control device 30 therefore reduces the desired voltage VHT from VHT1 to VHT2.

During the period from time t2 to time t3, the control device 30 controls the inverter 20 to cause the motor generator MG to generate less power than when there is no circulating current CC1 (before time t2).

Specifically, the control device 30 performs the feedback control described with reference to FIG. 4. Since the electric power supplied from the motor generator MG to the battery B1 decreases, the SOC of the battery B1 decreases, and the voltage VH of the battery B1 decreases (line 610). Accordingly, the sum of the voltages of the cells CELL (1) to CELL (k) (FIG. 2) decreases, and the current value IJ of the circulating current CC1 decreases from IJ2 to IJ3 (line 615). As a result, power loss due to the circulating current CC1 is reduced.

As described above, in the first embodiment, the control device 30 determines whether the circulating current CC1 has occurred in the battery B1 according to whether the internal resistance value Rb is equal to or larger than the first threshold TH1. When the circulating current CC1 has occurred, the control device 30 controls the inverter 20 to cause the motor generator MG to generate less power than when there is no circulating current CC1.

As a result, the SOC of the battery B1 decreases, and the voltage VH therefore decreases. Accordingly, the circulating current CC1 decreases. Power loss due to the circulating current CC1 can thus be reduced.

### Second Embodiment

An example in which the circulating current CC1 occurs in the battery B1 is described in the first embodiment. An example in which a circulating current circulates between the inside and outside of the battery B1 (that is, an example in which a circulating current flows out of the battery B1) will be described in a second embodiment.

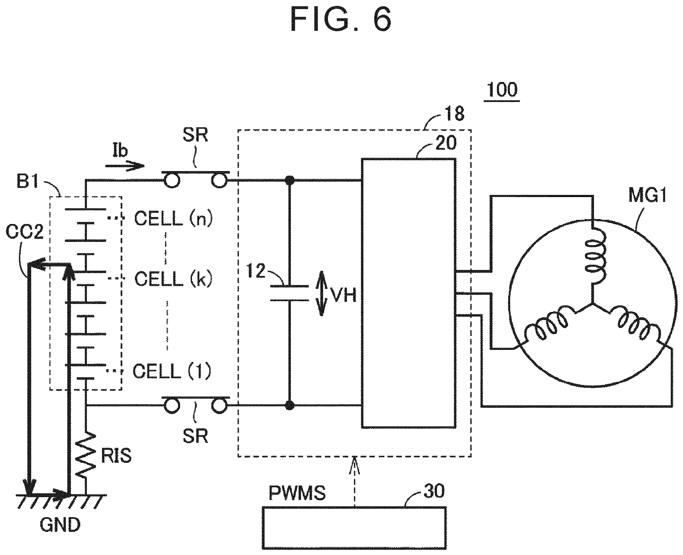

FIG. 6 schematically shows how a circulating current flows out of the battery B1. In the example of FIG. 6, a circulating current CC2 circulates between the inside of the battery B1 and a reference potential point GND (e.g., the body) of the vehicle 100. Insulation resistance RIS is insulation resistance between the battery B1 and the reference potential point GND of the vehicle 100.

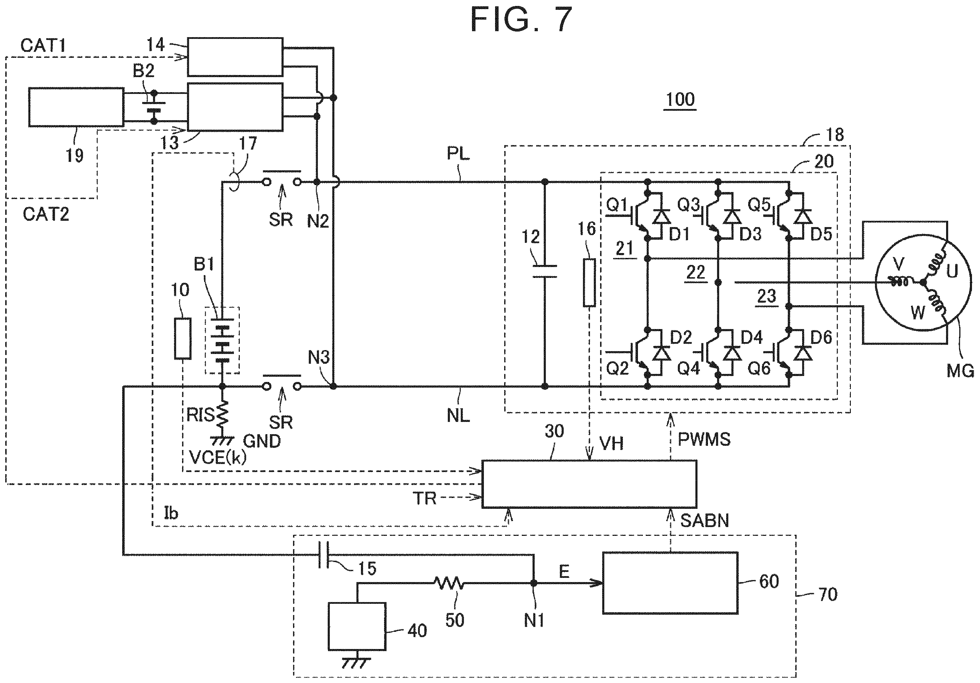

FIG. 7 shows the overall configuration of the vehicle 100 according to a second embodiment. The vehicle 100 according to the second embodiment is different from the vehicle 100 (FIG. 1) according to the first embodiment in that the vehicle 100 according to the second embodiment further includes an insulation resistance drop detector 70. The vehicle 100 according to the second embodiment is also different from the vehicle 100 according to the first embodiment in that the insulation resistance RIS is considered in the vehicle 100 according to the second embodiment. The other configurations of the vehicle 100 according to the second embodiment are basically the same as the configurations of the vehicle 100 according to the first embodiment.

The insulation resistance drop detector 70 is electrically connected to the negative electrode of the battery B1. The insulation resistance drop detector 70 includes a coupling capacitor 15, a resistor 50, an oscillation circuit 40, and a peak value detection circuit 60.

The coupling capacitor 15 is connected between the negative electrode of the battery B1 and a node N1. The coupling capacitor 15 is provided to insulate the resistor 50, the oscillation circuit 40, and the peak value detection circuit 60 from the negative electrode of the battery B1. The resistor 50 is located between the node N1 and the oscillation circuit 40.

The oscillation circuit 40 outputs an alternating current signal. The alternating current signal is output to the node N1 via the resistor 50.

The peak value detection circuit 60 detects a peak value of the voltage at the node N1. The voltage at the node N1 is equivalent to the voltage of the alternating current signal output from the oscillation circuit 40 divided by the resistance of the resistor 50 and the insulation resistance RIS. The peak value detection circuit 60 outputs a signal SABN to the control device 30. The signal SABN indicates the detected peak value.

A circulating current CC2 (FIG. 6) occurs when the insulation resistance RIS decreases. The voltage of the insulation resistance RIS decreases as the insulation resistance RIS decreases. The voltage at the node N1 connected to the insulation resistance RIS therefore decreases with the decrease in insulation resistance RIS. Accordingly, when the insulation resistance RIS decreases, the peak value detected by the peak value detection circuit 60 also decreases.

The control device 30 according to the second embodiment determines whether the insulation resistance RIS has excessively decreased based on the detected peak value. When the control device 30 determines that the insulation resistance RIS has excessively decreased, the control device 30 determines that the circulating current CC2 has occurred.

Specifically, the control device 30 determines that the insulation resistance RIS has excessively decreased when the peak value is smaller than a second threshold. In this case, since an excessive current tends to flow between the battery B1 and the reference potential point GND, the control device 30 determines that the circulating current CC2 has occurred. The second threshold is determined as appropriate in advance in a preliminary evaluation test etc.

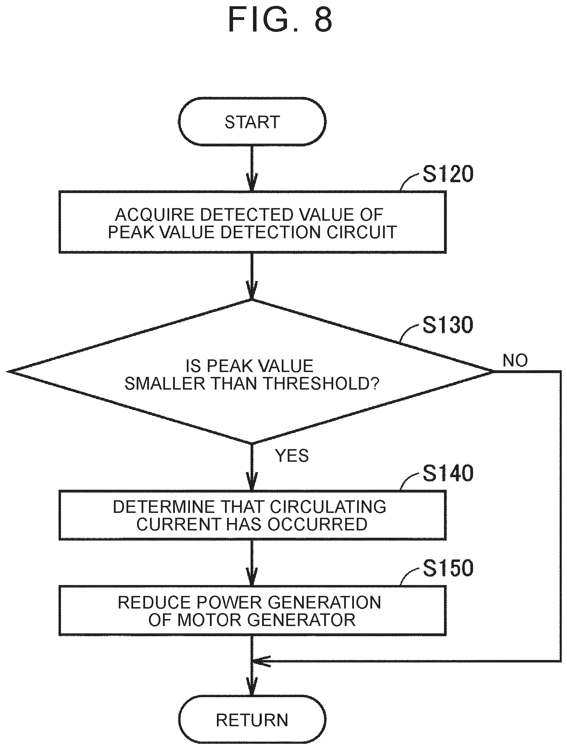

FIG. 8 is a flowchart showing an example of the steps of a process that is performed by the control device 30 according to the second embodiment. This process is performed at predetermined time intervals.

Referring to FIG. 8, the control device 30 acquires the detected value of the peak value detection circuit 60 through the signal SABN (step S120).

The control device 30 then determines whether the peak value is smaller than the second threshold (step S130). When the peak value is equal to or larger than the second threshold (NO in step S130), the control device 30 ends the process. The process then returns to step S120 after the predetermined time interval. When the peak value is smaller than the second threshold (YES in step S130), the control device 30 determines that the circulating current CC2 has occurred (step S140).

The control device 30 then controls the inverter 20 to cause the motor generator MG to generate less power than when there is no circulating current CC2 (step S 150). A method for reducing the power generation of the motor generator MG is similar to the method for reducing the power generation of the motor generator MG in step S50 (FIG. 3) in the first embodiment.

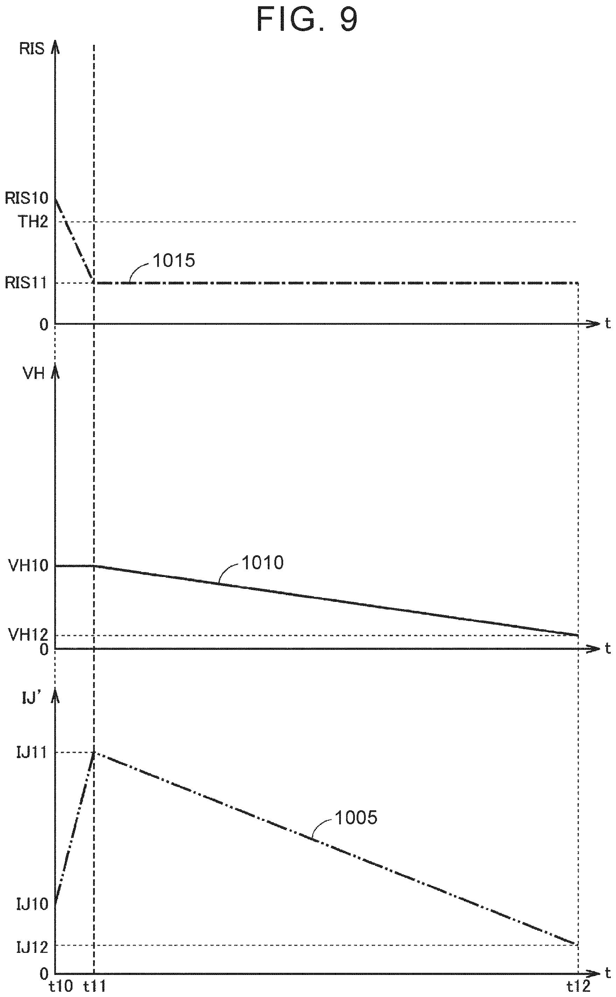

FIG. 9 shows an example of how the insulation resistance RIS, the voltage VH, and the value IJ' of the circulating current CC2 (FIG. 6) change with time during power generation of the motor generator MG. In FIG. 9, the abscissas represent time t. The ordinates of the upper, middle, and lower graphs of FIG. 9 represent the insulation resistance RIS, the voltage VH, and the current value IJ', respectively.

Specifically, a line 1015 represents a change in insulation resistance RIS with time. A line 1010 represents a change in voltage VH with time. A line 1005 represents a change in current value IJ' with time.

It is herein assumed that the insulation resistance RIS, the voltage VH, and the current value IJ' are RIS10, VH10, and IJ10 at time t10, respectively. Since the insulation resistance RIS is RIS10 at time t10 and RIS10 is equal to or higher than a second threshold TH2 (line 1015), the control device 30 determines that there is no circulating current CC2 outside of the battery B1 (in the example of FIG. 6, at the reference potential point GND of the vehicle 100).

When the insulation resistance RIS decreases to RIS11 at time t11 and RIS11 is lower than the second threshold TH2 (line 1015), the control device 30 determines that the circulating current CC2 has occurred. The value IJ' of the circulating current CC2 increases sharply from IJ10 to IJ11 at time t11 (line 1005). The control device 30 therefore reduces the desired voltage VHT from VHT1 to VHT2 based on the determination that the circulating current CC2 has occurred.

During the period from time t11 to time t12, the control device 30 controls the inverter 20 to cause the motor generator MG to generate less power than when there is no circulating current CC2 (before time t11). Specifically, the control device 30 performs the feedback control described with reference to FIG. 4. As a result, the electric power supplied from the motor generator MG to the battery B1 decreases.

With this decrease in electric power, the SOC of the battery B1 decreases, and the voltage VH of the battery B1 therefore decreases (line 1010). Accordingly, the sum of the voltages of the cells CELL (1) to CELL (k) (FIG. 6) of the circulating current circuit decreases, and the circulating current CC2 decreases. Specifically, the value IJ' of the circulating current CC2 decreases from IJ11 to IJ12 (line 1005). As a result, power loss due to the circulating current CC2 is reduced.

As described above, in the second embodiment, the control device 30 determines whether the circulating current CC2 flowing out of the battery B1 has occurred according to whether the insulation resistance RIS is lower than the second threshold TH2. When the circulating current CC2 has occurred, the control device 30 controls the inverter 20 to cause the motor generator MG to generate less power than when there is no circulating current CC2. As a result, power loss due to the circulating current CC2 is reduced.

### Third Embodiment

The vehicle 100 according to a third embodiment controls the air conditioner 14, the auxiliary machinery 19, and the DC-to-DC converter 13 (FIGS. 1 and 7) as follows in addition to controlling the inverter 20 to cause the motor generator MG to generate less power, when the circulating current (FIGS. 2 and 6) occurs. The circulating current thus decreases even faster than in the first and second embodiments. The following description is given with reference to FIG. 1 or FIG. 7.

In an example, when the circulating current occurs, the control device 30 further controls the air conditioner 14 or both the auxiliary machinery 19 and the DC-to-DC converter 13 so that power consumption of the air conditioner 14 or the auxiliary machinery 19 increases temporarily (for example, until the voltage VH decreases to VHT2 (FIG. 4)) as compared to when there is no circulating current.

As a result, of the electric power generated by the motor generator MG, at least a part of the electric power supplied to the battery B1 in the first and second embodiments is supplied to the air conditioner 14 or the auxiliary machinery 19 instead of the battery B1. Alternatively, of the electric power stored in the battery B1, the electric power supplied to the air conditioner 14 or the auxiliary machinery 19 temporarily increases as compared to the first and second embodiments. The SOC of the battery B1 therefore decreases faster than in the first and second embodiments.

As a result, when the circulating current occurs, the voltage VH decreases faster to the reduced desired voltage VHT (= VHT2) (FIG. 4) than when only the control of the inverter 20 (specifically, the feedback control described with reference to FIGS. 4, 5, and 8) is performed. Accordingly, the total power loss that occurs until the voltage VH decreases to VHT2 can be reduced.

### Modification of Third Embodiment

When the circulating current (FIGS. 2 and 6) occurs, the control device 30 may control the DC-to-DC converter 13 to increase the SOC of the battery B2 as compared to when there is no circulating current, in addition to controlling the inverter 20 to cause the motor generator MG to generate less power.

Specifically, the control device 30 temporarily (for example, until the voltage VH reaches VHT2) controls the DC-to-DC converter 13 so that at least a part of the electric power stored in the battery B1 is stored in the battery B2.

Since the power consumption of the battery B1 thus temporarily increases, the SOC of the battery B1 decreases faster than when this control is not performed. Therefore, the voltage VH associated with the SOC of the battery B1 also decreases faster than in the case described above. As a result, the total power loss that occurs until the voltage VH reaches VHT2 can be reduced.

The electric power stored in the battery B1 can be stored in advance in the battery B2 that stores the electric power required to operate other devices (for example, the auxiliary machinery 19). Therefore, this modification can be applied even when the auxiliary machinery 19 is not operating when a circulating current occurs.

Alternatively, the control device 30 may further temporarily (for example, until the voltage VH reaches VHT2) control the DC-to-DC converter 13 so that at least a part of the electric power generated by the motor generator MG is not supplied to the battery B1 but supplied to the battery B2.

Even with this control, the SOC of the battery B1 decreases faster than when this control is not performed. Therefore, the voltage VH associated with the SOC of the battery B1 also decreases faster than in the case described above. As a result, the total power loss that occurs until the voltage VH reaches VHT2 can be reduced.

As described above, when the circulating current occurs, the control device 30 may control the DC-to-DC converter 13 to increase the output power of the DC-to-DC converter 13 (corresponding to, for example, the power consumption of the auxiliary machinery 19 and the electric power stored in the battery B2) as compared to when there is no circulating current.

### Other Modifications

In FIG. 1 or 7, a converter may be provided between the battery B1 and the inverter 20 as a component of the PCU 20.

## Claims

1. A vehicle (100), comprising:
a motor (MG) configured to generate electric power;
an energy storage device (B1) configured to store the electric power generated by the motor (MG);
a drive device (18) electrically connected to the energy storage device (B1) and the motor (MG) and configured to drive the motor (MG) the drive device including an inverter; and a processor configured to control the drive device,
**characterized in that** the processor is configured to control the drive device (18) to cause the motor (MG) to generate less power when a circulating current occurs than when there is no circulating current, the circulating current being a current that does not flow into the drive device but circulates in the energy storage device (B1) or that circulates between inside and outside of the energy storage device (B1), and
the processor is configured to control the inverter (20) to cause the motor (MG) to output less regenerative torque when the circulating current occurs than when there is no circulating current.

2. The vehicle (100) according to claim 1, further comprising a load (14) connected to a power line (PL, NL) between the energy storage device (B1) and the drive device (18), wherein the processor is configured to control the load (14) to increase power consumption of the load (14) when the circulating current occurs than when there is no circulating current.

3. The vehicle (100) according to claim 1 or 2, further comprising a power converter (13) connected to a power line (PL, NL) between the energy storage device (B1) and the drive device (18), wherein:
the power converter (13) is configured to receive the electric power stored in the energy storage device (B1) via the power line (PL, NL) and convert the received electric power; and
the processor is configured to control the power converter (13) to increase output power of the power converter (13) when the circulating current occurs than when there is no circulating current.

## Patentansprüche

1. Fahrzeug (100), umfassend:
einen Motor (MG), der dazu konfiguriert ist, elektrische Energie zu erzeugen;
eine Energiespeichervorrichtung (B1), die dazu konfiguriert ist, die elektrische Energie zu speichern, die durch den Motor (MG) erzeugt wird;
eine Antriebsvorrichtung (18), die an die Energiespeichervorrichtung (B1) und den Motor (MG) elektrisch angeschlossen ist und dazu konfiguriert ist, den Motor (MG) anzutreiben, wobei die Antriebsvorrichtung einen Wechselrichter umfasst; und
einen Prozessor, der dazu konfiguriert ist, die Antriebsvorrichtung zu steuern,
**dadurch gekennzeichnet, dass** der Prozessor dazu konfiguriert ist, die Antriebsvorrichtung (18) zu steuern, um zu bewirken, dass der Motor (MG), wenn ein zirkulierender Strom auftritt, weniger Energie erzeugt, als wenn es keinen zirkulierenden Strom gibt, wobei der zirkulierende Strom ein Strom ist, der nicht in die Antriebsvorrichtung fließt, sondern in der Energiespeichervorrichtung (B1) zirkuliert, oder der zwischen dem Inneren und dem Äußeren der Energiespeichervorrichtung (B1) zirkuliert, und
der Prozessor dazu konfiguriert ist, den Wechselrichter (20) zu steuern, um zu bewirken, dass der Motor (MG), wenn der zirkulierende Strom auftritt, ein geringeres regeneratives Drehmoment ausgibt, als wenn es keinen zirkulierenden Strom gibt.

2. Fahrzeug (100) nach Anspruch 1, ferner umfassend einen Verbraucher (14), der an eine Stromleitung (PL, NL) zwischen der Energiespeichervorrichtung (B1) und der Antriebsvorrichtung (18) angeschlossen ist, wobei der Prozessor dazu konfiguriert ist, den Verbraucher (14) zu steuern, um den Stromverbrauch des Verbrauchers (14) zu erhöhen, wenn der zirkulierende Strom auftritt, als wenn kein zirkulierender Strom vorhanden ist.

3. Fahrzeug (100) nach Anspruch 1 oder 2, ferner umfassend einen Stromwandler (13), der an eine Stromleitung (PL, NL) zwischen der Energiespeichervorrichtung (B1) und der Antriebsvorrichtung (18) angeschlossen ist, wobei:
der Stromwandler (13) dazu konfiguriert ist, den elektrischen Strom, der in der Energiespeichervorrichtung (B1) gespeichert ist, über die Stromleitung (PL, NL) zu empfangen und die empfangene elektrische Energie umzuwandeln; und
der Prozessor dazu konfiguriert ist, den Stromwandler (13) dazu zu steuern, die Ausgangsenergie des Stromwandlers (13) zu erhöhen, wenn der zirkulierende Strom auftritt, als wenn kein zirkulierender Strom vorhanden ist.

## Revendications

1. Véhicule (100), comprenant :
un moteur (MG) configuré pour générer de la puissance électrique ;
un dispositif de stockage d'énergie (B1) configuré pour stocker la puissance électrique générée par le moteur (MG) ;
un dispositif d'entraînement (18) connecté électriquement au dispositif de stockage d'énergie (B1) et au moteur (MG) et configuré pour entraîner le moteur (MG), le dispositif d'entraînement comportant un onduleur ; et
un processeur configuré pour commander le dispositif d'entraînement,
**caractérisé en ce que** le processeur est configuré pour commander le dispositif d'entraînement (18) pour amener le moteur (MG) à générer moins de puissance en présence d'un courant qui circule qu'en l'absence d'un courant qui circule, le courant qui circule étant un courant qui n'entre pas dans le dispositif d'entraînement mais qui circule dans le dispositif de stockage d'énergie (B1) ou qui circule entre l'intérieur et l'extérieur du dispositif de stockage d'énergie (B1), et
le processeur est configuré pour commander l'onduleur (20) pour amener le moteur (MG) à délivrer un couple de régénération moins important en présence du courant qui circule qu'en l'absence d'un courant qui circule.

2. Véhicule (100) selon la revendication 1, comprenant en outre une charge (14) connectée à une ligne électrique (PL, NL) entre le dispositif de stockage d'énergie (B1) et le dispositif d'entraînement (18), dans lequel le processeur est configuré pour commander la charge (14) pour augmenter la consommation de puissance de la charge (14) en présence du courant qui circule par rapport au cas d'absence d'un courant qui circule.

3. Véhicule (100) selon la revendication 1 ou 2, comprenant en outre un convertisseur de puissance (13) connecté à une ligne électrique (PL, NL) entre le dispositif de stockage d'énergie (B1) et le dispositif d'entraînement (18), dans lequel :
le convertisseur de puissance (13) est configuré pour recevoir la puissance électrique stockée dans le dispositif de stockage d'énergie (B1) via la ligne électrique (PL, NL) et convertir la puissance électrique reçue ; et
le processeur est configuré pour commander le convertisseur de puissance (13) pour augmenter la puissance de sortie du convertisseur de puissance (13) en présence du courant qui circule par rapport au cas d'absence d'un courant qui circule.
